# EUROPÄISCHE PATENTSCHRIFT

(11) **EP 2 920 859 B1**
(45) Veröffentlichungstag und Bekanntmachung des Hinweises auf die Patenterteilung: **04.01.2017**
(21) Anmeldenummer: 13763056.2
(22) Anmeldetag: 17.09.2013
(51) Int. Cl.: H02J 5/00, B60L 11/18, H01F 38/14, H02J 7/02

(54) **ENERGIEÜBERTRAGUNGSVORRICHTUNG UND ENERGIEÜBERTRAGUNGSANORDNUNG**
ENERGY TRANSMISSION DEVICE AND ENERGY TRANSMISSION SYSTEM
DISPOSITIF DE TRANSFERT D'ÉNERGIE ET ENSEMBLE DE TRANSFERT D'ÉNERGIE

(30) Priorität: 15.11.2012 DE 102012220913
(43) Veröffentlichungstag der Anmeldung: 23.09.2015
(73) Patentinhaber: Robert Bosch GmbH, 70442 Stuttgart (DE)
(72) Erfinder: SCHUBERT, Peter, 74211 Leingarten (DE); EYMANN, Thomas, 71638 Ludwigsburg (DE)
(86) Internationale Anmeldenummer: PCT/EP2013/069216
(87) Internationale Veröffentlichungsnummer: WO 2014/075835

(56) Entgegenhaltungen:
- DE-U1-202011 050 264
- US-A1- 2011 074 346
- US-A1- 2011 285 349

## Beschreibung

Die vorliegende Erfindung betrifft eine Energieübertragungsvorrichtung mit einer Anschlusseinheit zum Anschließen einer elektrischen Energiequelle oder einer elektrischen Energiesenke und einem Übertragungsglied, das mit der Anschlusseinheit elektrisch gekoppelt ist und das zur Übertragung von elektrischer Energie mit einem zweiten Übertragungsglied induktiv koppelbar ist.

Ferner betrifft die vorliegende Erfindung eine Energieübertragungsanordnung mit einer ersten Energieübertragungseinheit, und einer zweiten Energieübertragungseinheit, die mit der ersten Energieübertragungseinheit zur Übertragung von elektrischer Energie induktiv koppelbar ist.

### Stand der Technik

Auf dem Gebiet der Kraftfahrzeugantriebstechnik ist es allgemein bekannt, eine elektrische Maschine als alleinigen Antrieb oder gemeinsam mit einem Antriebsmotor eines anderen Typs (Hybridantrieb) zu verwenden. In derartigen Elektro- oder Hybridfahrzeugen werden typischerweise elektrische Maschinen als Antriebsmotor verwendet, die durch einen elektrischen Energiespeicher, wie zum Beispiel einen Akkumulator, mit elektrischer Energie versorgt werden. Die elektrischen Energiespeicher von Elektrofahrzeugen oder Plugin-Hybridfahrzeugen müssen regelmäßig je nach Ladezustand mit einem elektrischen Energieversorgungsnetz verbunden werden, um den Energiespeicher mit elektrischer Energie zu laden.

Zur Übertragung der elektrischen Energie von einer Ladestation auf das Fahrzeug kann beispielsweise ein Kabel verwendet werden. Eine derartige Kabelverbindung bietet allerdings einen sehr schlechten Bedienungskomfort und stellt außerdem eine mögliche Gefahr für den Anwender dar, da dieser bei Beschädigung an der Steckverbindung oder dem Kabel in Kontakt mit spannungsführenden Teilen kommen könnte.

Alternativ zu einer Kabelverbindung besteht die Möglichkeit, Fahrzeuge über eine drahtlose Energieübertragung mit elektrischer Energie zu versorgen. Bei einer induktiven Energieübertragung wird auf einer Primärseite mithilfe einer Spule ein magnetisches Wechselfeld erzeugt. Zumindest ein Teil dieses magnetischen Wechselfelds durchdringt eine Sekundärseite, die ebenfalls eine Spule aufweist. Dadurch wird in der Spule der Sekundärseite eine Spannung induziert und somit Energie von der Primärseite auf die Sekundärseite übertragen. Dabei kann das Spulensystem der Primärseite und der Sekundärseite als Transformator mit einem großen Luftspalt modelliert werden. Der Luftspalt verursacht große Streuinduktivitäten und eine relativ schlechte Kopplung zwischen der Primär- und der Sekundärspule. Die Streuinduktivitäten führen zu hohen Blindströmen im System, die nicht zur Energieübertragung beitragen, jedoch ohmsche Verluste erzeugen. Daher ist der Wirkungsgrad der drahtlosen Energieübertragung schlechter als bei der kabelgebundenen Übertragung. Jedoch ist eine derartige Energieübertragung durch die einfachere Handhabung komfortabler und bietet somit eine höhere Akzeptanz bei dem Anwender.

Bei der drahtlosen Energieübertragung stellt die Betriebssicherheit ein wichtiges Thema dar. So wird während der Energieübertragung in einem Bereich zwischen der Primärseite und der Sekundärseite ein magnetisches Feld hoher Feldstärke und Flussdichte aufgebaut. Befinden sich beispielsweise magnetisierbare Stäube oder Verschmutzungen in diesem Zwischenraum, so werden diese durch die induzierten Wirbelströme sehr stark aufgeheizt. Infolgedessen werden die magnetisierbaren Stäube oder Verschmutzungen als glühendes Material in einer Umgebung der drahtlosen Energieübertragung freigesetzt und gefährden damit Menschen und Gegenstände in diesem Bereich. Konsequenterweise können drahtlose Energieübertragungseinrichten in Umgebungen, in denen derartige magnetisierbare Stäube oder Verschmutzungen auftreten (zum Beispiel Eisenerzabbau, Metallwerkstätten, Stahlwerk etc.), nicht eingesetzt werden.

US 2011/074346 offenbart ein induktives Ladesystem für eine Fahrzeug mit ein Vorrichtung zur Kühlung und/oder dem Entfernung von Gegenstände in dem Bereich die Übertragungseinheiten. Es offenbart, dass die Kühlung oder die Entfernung von Eis durch das Aufbringen einer Flüssigkeit gemacht wird. Die Aufbringung findet statt in Abhängigkeit von der Detektion des Fahrzeugs in dem Bereich die Übertragungseinheiten.

### Offenbarung der Erfindung

Die vorliegende Erfindung stellt daher eine Energieübertragungsvorrichtung mit einer Anschlusseinheit zum Anschließen einer elektrischen Energiequelle oder einer elektrischen Energiesenke, einen Übertragungsglied, das mit der Anschlusseinheit elektrisch gekoppelt ist und das zur Übertragung von elektrischer Energie mit einem zweiten Übertragungsglied induktiv koppelbar ist, und einer Reinigungseinheit bereit, die dazu ausgebildet ist, ein Reinigungsmedium in eine Übertragungsstrecke zwischen dem ersten Übertragungsglied und dem zweiten Übertragungsglied einzubringen, um Partikel aus der Übertragungsstrecke zu entfernen.

Ferner stellt die vorliegende Erfindung eine Energieübertragungsanordnung mit einer ersten Energieübertragungseinheit und einer zweiten Energieübertragungseinheit bereit, die mit der ersten Energieübertragungseinheit zur Übertragung von elektrischer Energie induktiv koppelbar ist, wobei wenigstens eine der Energieübertragungseinheiten eine Energieübertragungsvorrichtung gemäß der vorliegenden Erfindung aufweist.

### Vorteile der Erfindung

Durch die erfindungsgemäße Reinigungseinheit werden Partikel aus der Übertragungsstrecke zwischen dem ersten Übertragungsglied und dem zweiten Übertragungsglied wirksam entfernt. Damit kann die drahtlose Energieübertragungsvorrichtung auch in Umgebungen betrieben werden, in denen mit magnetisierbaren Stäuben oder Verschmutzungen zu rechnen ist. Das Gefährdungspotential der drahtlosen Energieübertragung wird reduziert. Damit kann die Energieübertragungsvorrichtung mit einer maximal möglichen Leistung betrieben werden.

Außerdem wird durch die Reinigungseinheit sichergestellt, dass sich z.B. keine größeren Steine mehr in der Übertragungsstrecke befinden. Damit kann der Abstand zwischen dem ersten und dem zweiten Übertragungsglied derart eingestellt werden, dass ein möglichst hoher Wirkungsgrad bei der Energieübertragung erzielt wird.

Dabei kann die Reinigungseinheit in einer Ausführungsform nur in der ersten Energieübertragungseinheit oder in der zweiten Energieübertragungseinheit angeordnet sein. Dadurch können Kosten eingespart werden, da die Reinigungseinheit nur in einer der Energieübertragungseinheiten vorgesehen ist.

In einer alternativen Ausführungsform können auch beide Energieübertragungseinheiten jeweils eine erfindungsgemäße Energieübertragungsvorrichtung aufweisen. Dadurch wird eine sehr effektive und gründliche Reinigung der Übertragungsstrecke von den Partikeln ermöglicht.

In einer Ausführungsform weisen die Partikel magnetisierbare Partikel auf.

In den magnetisierbaren Partikeln werden durch das magnetische Wechselfeld Wirbelströme induziert. Die Wirbelströme wiederum führen zu einer sehr starken Erhitzung dieser Partikel. Die bis zur Weißglut erhitzten Partikel werden in einer Umgebung der drahtlosen Energieübertragung freigesetzt und gefährden damit Menschen und Gegenstände in diesem Bereich. Beispielsweise können durch die erhitzten Partikel Brände ausgelöst werden. Aufgrund der erfindungsgemäßen Reinigungseinheit können die magnetisierbaren Partikel aus der Übertragungsstrecke entfernt werden. Dadurch können die oben geschilderten Gefährdungen vermieden werden. Somit kann die Energieübertragungsvorrichtung auch in Umgebungen, in denen Metallspäne und/oder Metallstäube auftreten, betrieben werden.

Gemäß einer weiteren Ausführungsform weist die Energieübertragungsvorrichtung ferner eine Steuereinheit auf, die dazu ausgebildet ist, eine Annäherung zwischen dem ersten Übertragungsglied und dem zweiten Übertragungsglied zu erkennen und auf der Grundlage der erkannten Annäherung die Reinigungseinheit zu steuern.

Durch diese Maßnahme wird bei Erkennen einer Annäherung zwischen dem ersten Übertragungsglied und dem zweiten Übertragungsglied die Reinigung der Übertragungsstrecke automatisch gestartet. Ein manueller Eingriff ist damit nicht notwendig. Die Reinigung der Übertragungsstrecke kann so zum Beispiel während der Einstellung eines korrekten Luftspaltes zwischen dem ersten und dem zweiten Übertragungsglied erfolgen. Infolgedessen kann die Energieübertragung bei Erreichen des korrekten Luftspaltabstands sofort gestartet werden, da die Reinigung der Übertragungsstrecke bereits erfolgt ist.

In einer alternativen Ausführungsform kann die Reinigung der Übertragungsstrecke auch erst gestartet werden, wenn der korrekte Abstand zwischen den beiden Übertragungsgliedern erreicht ist.

In einer weiteren Ausführungsform ist die Steuereinheit zusätzlich dazu ausgebildet, einen Verschmutzungsgrad der Übertragungsstrecke zu erkennen. Des Weiteren kann die Steuereinheit dazu ausgebildet sein, die Reinigungseinheit in Abhängigkeit des Verschmutzungsgrades zu steuern.

Dies ermöglicht eine sehr flexible und auf den Verschmutzungsgrad abgestimmte Reinigung der Übertragungsstrecke.

In einer weiteren Ausführungsform ist die Reinigungseinheit dazu ausgebildet, Partikel von in einem Bereich der Übertragungsstrecke angeordneten Oberflächenanteilen des ersten Übertragungsglieds und/oder des zweiten Übertragungsglieds zu entfernen.

Wird die Energieübertragungsvorrichtung in verschmutzten Umgebungen eingesetzt, so können sich beispielsweise magnetisierbare Stäube auf den Oberflächen der Übertragungsglieder absetzen. Bei einer anschließenden Energieübertragung würden die magnetisierbaren Stäube aufgrund der induzierten Wirbelströme sehr stark erhitzt werden und könnten damit die Übertragungsglieder beschädigen. Mithilfe der erfindungsgemäßen Reinigungseinheit können die Partikel bzw. die magnetisierbaren Stäube, die sich auf den Oberflächen der Übertragungsglieder abgesetzt haben, aus der Übertragungsstrecke entfernt werden. Aufgrund dessen können Schäden an den Übertragungsgliedern vermieden werden.

Gemäß einer weiteren Ausführungsform weist das erste Übertragungsglied eine Spule zum Übertragen von elektrischer Energie auf.

Mithilfe der Spule kann das erste Übertragungsglied mit dem zweiten Übertragungsglied induktiv gekoppelt werden. Befinden sich magnetisierbare Partikel auf der Oberfläche der Spule, so werden diese durch die Reinigungseinheit vor Starten der Energieübertragung aus der Übertragungsstrecke entfernt. Gefährdungen durch umherfliegende, glühende Partikel werden damit reduziert.

In einer weiteren Ausführungsform weist die Reinigungseinheit wenigstens eine Zuleitungseinheit zum Einbringen eines Reinigungsmediums in einen Bereich der Übertragungsstrecke auf, wobei das Reinigungsmedium dazu ausgebildet ist, die Partikel aus der Übertragungsstrecke zu entfernen.

Erfindungsgemäß wird eine Zuleitungseinheit vorgesehen, die beispielsweise als Spülkanal in dem Übertragungsglied realisiert sein kann. Die Zuleitungseinheit dient dazu, das Reinigungsmedium auf die Oberflächen der Übertragungsglieder aufzubringen und das Reinigungsmedium in dem Bereich zwischen den Übertragungsgliedern einzuführen. Dies ermöglicht eine sehr gründliche Reinigung der gesamten Übertragungsstrecke. Gemäß einer weiteren Ausführungsform ist die Zuleitungseinheit mit einer Druckeinheit gekoppelt, die dazu ausgebildet ist, das Reinigungsmedium mittels der Zuleitungseinheit unter Druck in den Bereich der Übertragungsstrecke einzubringen.

Durch das Einbringen des Reinigungsmediums unter Druck kann die Übertragungsstrecke noch effektiver und gründlicher von den Partikeln gereinigt werden.

In einer weiteren Ausführungsform weist das Reinigungsmedium Umgebungsluft auf, wobei die Reinigungseinheit dazu ausgebildet ist, Pressluft in den Bereich der Übertragungsstrecke einzubringen.

Die verwendete Pressluft ermöglicht eine gute Reinigung der Übertragungsstrecke und hinterlässt im Wesentlichen keine Rückstände auf den Oberflächen der Übertragungsglieder. Infolgedessen wird beispielsweise ein magnetischer Schmutz wirksam aus der Übertragungsstrecke entfernt. Die drahtlose Leistungsübertragung ist damit gefahrlos möglich.

Gemäß einer weiteren Ausführungsform weist das Reinigungsmedium Wasser und/oder Lösungsmittel auf.

In Umgebungen, in denen mit schlammigen Verschmutzungen zu rechnen ist, kann das Lösungsmittel oder Wasser der Pressluft beigemischt werden. Alternativ kann als Reinigungsmedium ausschließlich das Lösungsmittel und/oder das Wasser eingesetzt werden.

In einer weiteren Ausführungsform ist die Zuleitungseinheit derart angeordnet, dass das Reinigungsmedium in einem Zentralbereich der Übertragungsstrecke in einer Umgebung des ersten Übertragungsglieds einbringbar ist.

Durch diese Maßnahme wird sichergestellt, dass eine gründliche, möglichst großflächige Reinigung der Übertragungsglieder erfolgen kann. Ebenso wird mit dieser Anordnung eine sehr gute Reinigung des Bereichs zwischen den Übertragungsgliedern erreicht.

In einer alternativen Ausführungsform kann die Zuleitungseinheit jedoch auch an einer anderen beliebigen Position in der Umgebung der Übertragungsstrecke angeordnet sein. In einer weiteren Ausführungsform weist die Reinigungseinheit einen Besen auf, der beweglich an der Energieübertragungsvorrichtung gelagert ist und der dazu ausgebildet ist, die Partikel mittels einer Bewegung relativ zu der Energieübertragungsvorrichtung aus der Übertragungsstrecke zu entfernen.

Dabei wird vorzugsweise ein elektrisch nicht leitfähiger und/oder nicht magnetisierbarer Besen eingesetzt. Mittels einer rotierenden oder wischenden Bewegung des Besens können die Oberfläche der Energieübertragungsvorrichtung bzw. die Übertragungsstrecke gereinigt werden. Zusätzlich zu der Bewegung des Besens kann beispielsweise komprimierte Luft und/oder ein Reinigungsmittel in die Übertragungsstrecke eingebracht werden, um den Reinigungsvorgang zu unterstützen.

In einer weiteren Ausführungsform weist die Reinigungseinheit einen Sensor auf, der dazu ausgebildet ist, eine Abnutzung des Besens zu erkennen.

Damit wird automatisch detektiert, dass z.B. Borsten des Besens abgenutzt sind und daher ein Austausch des Besens erfolgen sollte, um die Effizienz der Reinigung aufrechtzuerhalten.

In einer besonders bevorzugten Ausführungsform der Energieübertragungsanordnung ist die erste Energieübertragungseinheit in einem elektrisch antreibbaren Kraftfahrzeug installiert und mit einer Traktionsbatterie des Kraftfahrzeugs elektrisch gekoppelt und die zweite Energieübertragungseinheit ist in einer Ladestation installiert und mit einem Energieversorgungsnetz elektrisch gekoppelt.

In dieser Ausführungsform kann die elektrische Energie in einer Ausführungsform von dem Energieversorgungsnetz an die Traktionsbatterie übertragen werden, um die Traktionsbatterie aufzuladen. In einem weiteren Ausführungsbeispiel kann die Traktionsbatterie auch elektrische Energie in das Energieversorgungsnetz einspeisen.

Dabei kann die Reinigungseinheit beispielsweise nur in der Energieübertragungseinheit der Ladestation angeordnet sein.

Dadurch können Kosten eingespart werden, da die Energieübertragungsvorrichtung nur in einer der Energieübertragungseinheiten vorgesehen wird.

In einer alternativen Ausführungsform kann die Energieübertragungsvorrichtung auch nur in der Energieübertragungseinheit des elektrisch antreibbaren Kraftfahrzeugs installiert sein. Dadurch wird es ermöglicht, eine von den Ladestationen unabhängige Lösung direkt in dem Kraftfahrzeug zu realisieren. Das mit der erfindungsgemäßen Reinigungseinheit ausgestattete Kraftfahrzeug kann somit in allen Umgebungen unabhängig von der Ausführungsform der Ladestation drahtlos geladen werden.

In einer weiteren alternativen Ausführungsform weist sowohl die erste Energieübertragungseinheit als auch die zweite Energieübertragungseinheit eine Energieübertragungsvorrichtung mit einer Reinigungseinheit auf. Damit kann die Übertragungsstrecke zwischen den Übertragungsgliedern sehr effektiv und gründlich gereinigt werden. Gefährdungen durch erhitzte, glühende Partikel können vermieden werden.

In einer weiteren Ausführungsform der Energieübertragungsanordnung kann die erste Energieübertragungseinheit auch in einer Arbeitsmaschine wie z.B. einem Radlader, einem Muldenkipper oder einem Bohrgerät installiert werden, die beispielsweise in einer Mine eingesetzt wird. Dabei ist die erste Energieübertragungseinheit mit einer Batterie gekoppelt, die elektrische Energie für die auszuführenden Arbeitsfunktionen bereitstellt.

Kurze Beschreibung der Zeichnungen
Fig. 1 zeigt in schematischer Form ein elektrisch angetriebenes Kraftfahrzeug und eine Energieübertragungsanordnung; und
Fig. 2 zeigt in schematischer Form einen detaillierten Aufbau der Energieübertragungsanordnung.

### Ausführungsformen der Erfindung

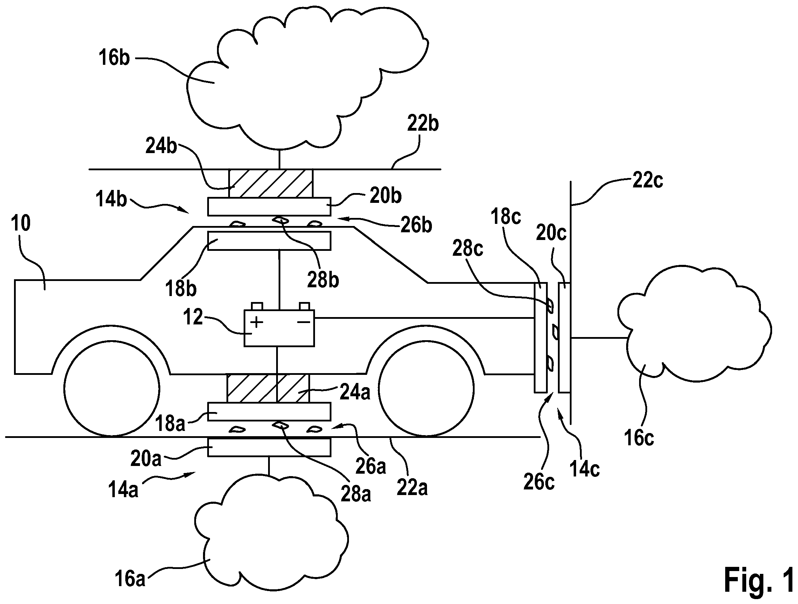

In Fig. 1 ist ein elektrisch angetriebenes Kraftfahrzeug schematisch dargestellt und generell mit 10 bezeichnet. Das elektrisch angetriebene Kraftfahrzeug 10 ist beispielsweise ein Elektrofahrzeug 10 oder ein Hybridfahrzeug 10. In derartigen Elektro- oder Hybridfahrzeugen werden typischerweise elektrische Drehfeldmaschinen als Antriebsmotor verwendet. Dabei wird die in Fig. 1 nicht näher bezeichnete Drehfeldmaschine üblicherweise von einer an Bord des Kraftfahrzeugs 10 befindlichen Traktionsbatterie 12 mit elektrischer Energie versorgt. Nach einer bestimmten Betriebsdauer des Kraftfahrzeugs 10 muss die Traktionsbatterie 12 wieder mit elektrischer Energie aufgeladen werden. Dazu wird die Traktionsbatterie 12 über eine Energieübertragungsanordnung 14 mit einem Energieversorgungsnetz 16 elektrisch gekoppelt. In der Fig. 1 sind drei alternative Kopplungsmöglichkeiten gezeigt, die über die entsprechenden Energieübertragungsanordnungen 14a, 14b, 14c und die dazu gehörigen Energieversorgungsnetze 16a, 16b, 16c kenntlich gemacht sind. Wie der Fig. 1 zu entnehmen ist, kann die Energieübertragungsanordnung 14 beispielsweise vertikal oder horizontal ausgerichtet werden.

Die Energieübertragungsanordnung 14 weist eine erste Energieübertragungseinheit 18 und eine zweite Energieübertragungseinheit 20 auf. Die erste Energieübertragungseinheit 18 und die zweite Energieübertragungseinheit 20 sind induktiv miteinander koppelbar, um Energie zwischen den beiden Energieübertragungseinheiten 18, 20 zu übertragen. In dem vorliegenden Beispiel ist die erste Energieübertragungseinheit 18 fest an dem Kraftfahrzeug 10 installiert und elektrisch mit der Traktionsbatterie 12 gekoppelt. Dagegen ist die zweite Energieübertragungseinheit 20 an einer festen Position 22 installiert und mit dem Energieversorgungsnetz 16 elektrisch gekoppelt. Dabei kann die zweite Energieübertragungseinheit 20 einen Teil einer fest installierten Ladestation bilden. Je nach Ausführungsbeispiel kann die feste Position 22 beispielsweise ein Fahrbahnbelag 22a sein, in dem die zweite Energieübertragungseinheit 20a eingelassen ist. Alternativ kann die feste Position 22 auch eine Garagendecke 22b oder eine Wand 22c sein.

Optional können die erste Energieübertragungseinheit 18 und/oder die zweite Energieübertragungseinheit 20 mit einer entsprechenden Hub-/Senkeinrichtung 24 gekoppelt sein. Mithilfe der Hub-/Senkeinrichtung 24 kann eine kurze Übertragungsstrecke 26, im vorliegenden Beispiel ein geringer Luftspalt 26, zwischen den beiden Energieübertragungseinheiten 18, 20 eingestellt werden. Durch den geringen Luftspalt 26 wird eine effektive Leistungsübertragung der Energieübertragungsanordnung 14 sichergestellt.

Wird die Traktionsbatterie 12 mittels der Energieübertragungsanordnung 14 und des damit gekoppelten Energieversorgungsnetzes 16 mit elektrischer Energie geladen, so wird zwischen den beiden Energieübertragungseinheiten 18, 20 ein magnetisches Wechselfeld mit hoher Feldstärke und Flussdichte aufgebaut. Bei Einsatz der Energieübertragungseinheit 14 in einer Umgebung, in der mit magnetisierbaren Stäuben oder Verschmutzungen zu rechnen ist (zum Beispiel Eisenerzabbau, Metallwerkstätten, Stahlwerk etc.), können sich magnetisierbare Partikel 28 in der Übertragungsstrecke 26 befinden. Dabei können die magnetisierbaren Partikel 28 auf Oberflächen der Energieübertragungseinheiten 18, 20 und/oder in einem Zwischenraum zwischen den Energieübertragungseinheiten 18, 20 angeordnet sein.

Bei einem Start der Energieübertragung werden die magnetisierbaren Partikel 28 durch die induzierten Wirbelströme sehr stark erhitzt. Die glühenden Partikel 28 werden in einer Umgebung der Energieübertragungsanordnung 14 freigesetzt und können damit Menschen gefährden und/oder Gegenstände beschädigen. Beispielsweise kann durch die umherfliegenden, glühenden Partikel 28 ein Brand ausgelöst werden. Ebenso ist es denkbar, dass die Energieübertragungseinheiten 18, 20 durch die glühenden Partikel 28 beschädigt werden.

Um derartige Gefährdungen und/oder Beschädigungen zu vermeiden, ist die erfindungsgemäße Energieübertragungsanordnung 14 dazu ausgebildet, die Partikel 28 vor und/oder während der Energieübertragung aus der Übertragungsstrecke 26 zu entfernen.

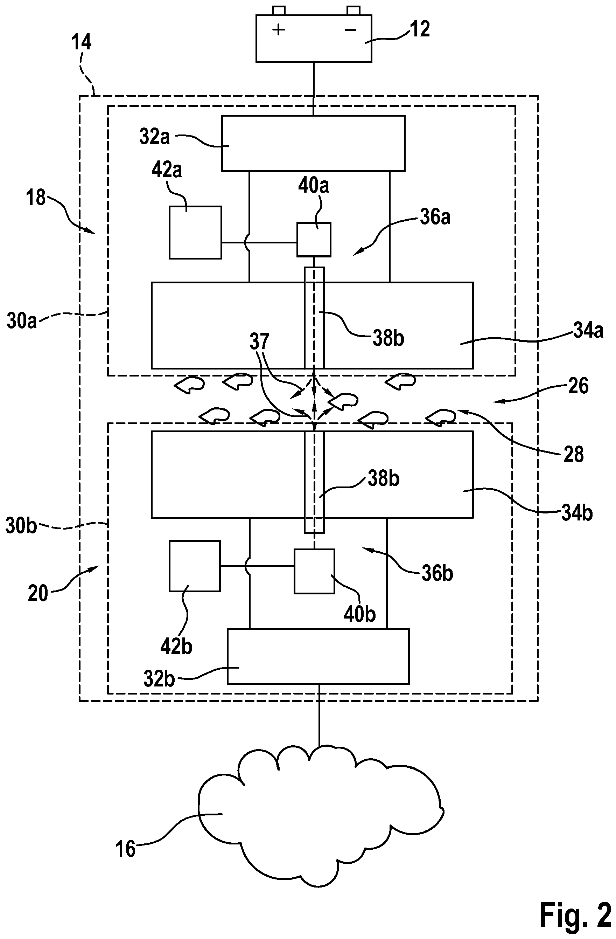

Zur näheren Erläuterung ist in Fig. 2 eine detaillierte, schematische Ansicht der Energieübertragungsanordnung 14 gezeigt. In dem vorliegenden Beispiel soll angenommen werden, dass sowohl die erste Energieübertragungseinheit 18 als auch die zweite Energieübertragungseinheit 20 eine erfindungsgemäße Energieübertragungsvorrichtung 30 aufweisen. In einer alternativen Ausführungsform der Energieübertragungsanordnung 14 kann auch nur eine der beiden Energieübertragungseinheiten 18, 20 die erfindungsgemäße Energieübertragungsvorrichtung 30 aufweisen.

Die Energieübertragungsvorrichtung 30 weist eine Anschlusseinheit 32 und ein Übertragungsglied 34 auf, die elektrisch miteinander gekoppelt sind. In dem in Fig. 2 illustrierten Beispiel ist die Anschlusseinheit 32a mit der Traktionsbatterie 12 und die Anschlusseinheit 32b mit dem Energieversorgungsnetz 16 elektrisch gekoppelt. Die Übertragungsglieder 34a, 34b können beispielsweise Spulen 34a, 34b aufweisen, die zur Übertragung von elektrischer Energie induktiv koppelbar sind.

Wie bereits zu Fig. 1 ausgeführt, werden die in der Übertragungsstrecke 26 angeordneten magnetisierbaren Partikel 28 bei Start der Energieübertragung stark erhitzt. Daher müssen die magnetisierbaren Partikel 28 vorzugsweise vor oder kurz nach Start der Energieübertragung auf der Übertragungsstrecke 26 entfernt werden. Dazu weist die Energieübertragungsvorrichtung 30 eine Reinigungseinheit 36 auf. Die Reinigungseinheit 36 ist dazu ausgebildet, ein Reinigungsmedium 37 in die Übertragungsstrecke 26 zwischen dem Übertragungsglied 34a und dem Übertragungsglied 34b einzubringen, um die Partikel 28 aus der Übertragungsstrecke 26 zu entfernen. Dadurch können Gefährdungen von Menschen und/oder Beschädigungen von Gegenständen vermieden werden.

Zum Einbringen des Reinigungsmediums 37 in einen Bereich der Übertragungsstrecke 26 weist die Reinigungseinheit 36 eine Zuleitungseinheit 38 auf, die vorzugsweise in einem Mittenbereich des Übertragungsglieds 34 angeordnet ist, so dass das Reinigungsmedium 37 in einen Zentralbereich der Übertragungsstrecke 26 eingebracht werden kann. Darüber hinaus weist die Reinigungseinheit 36 eine Druckeinheit 40 auf, die mit der Zuleitungseinheit 38 gekoppelt ist. Mithilfe der Druckeinheit 40 und der Zuleitungseinheit 38 kann das Reinigungsmedium 37 unter Druck in den Bereich der Übertragungsstrecke 26 eingeführt werden. Damit kann die Übertragungsstrecke 26 sehr effektiv von den magnetisierbaren Partikeln 28 gereinigt werden. Dabei werden sowohl magnetisierbare Partikel 28, die sich auf den Oberflächen der Übertragungsglieder 34 abgesetzt haben, als auch magnetisierbare Partikel 28, die in dem Zwischenraum zwischen den beiden Übertragungsgliedern 34 angeordnet sind, aus der Übertragungsstrecke 26 entfernt.

Als Reinigungsmedium 37 kann beispielsweise eine Pressluft 37 in den Bereich der Übertragungsstrecke 26 eingeblasen werden. In Umgebungen mit schlammigen Verschmutzungen kann der Pressluft ein Lösungsmittel oder Wasser beigemischt werden. In einer alternativen Ausführungsform kann die Pressluft 37 auch durch das Lösungsmittel oder Wasser ersetzt werden. Durch die Entfernung der magnetisierbaren Partikel 28 (beispielsweise Metallspäne, -stäube) ist die drahtlose Energieübertragung gefahrlos möglich.

Die Energieübertragungsvorrichtung 30 weist außerdem eine Steuereinheit 42 auf, die dazu ausgebildet ist, eine Annäherung zwischen dem Übertragungsglied 34a und dem Übertragungsglied 34b zu erkennen. Sofern eine derartige Annäherung erkannt wird, steuert die Steuereinheit 42 die Reinigungseinheit 36 an, um das Einbringen des Reinigungsmediums 37 in die Übertragungsstrecke 26 zu starten. Zum Ermitteln der Annäherung der beiden Übertragungsglieder 34 kann die Steuereinheit 42 beispielsweise mit in Fig. 2 nicht näher bezeichneten Sensoren gekoppelt sein, die dazu ausgebildet sind, ein gegenüberliegendes Übertragungsglied 34 zu erkennen. Alternativ kann die Steuereinheit 42 die Annäherung der beiden Übertragungsglieder 34 aus der Veränderung der magnetischen Kopplung und damit verbunden der Veränderung von elektrischen Größen des Übertragungsgliedes 34 ableiten.

Die Steuereinheit 42 steuert die Reinigungseinheit 36 bzw. die Druckeinheit 40 derart an, dass das Reinigungsmedium 37 ab Erkennen der Annäherung der Übertragungsglieder 34 bis zum Erreichen eines voreingestellten Abstands zwischen den Übertragungsgliedern 34 in die Übertragungsstrecke 26 eingebracht wird. Damit wird die Übertragungsstrecke 26 von den magnetisierbaren Partikeln 28 gereinigt bevor die Energieübertragung gestartet wird. Damit werden Gefährdungen oder auch Beschädigungen der Übertragungsglieder 34 vermieden.

In einer alternativen Ausführungsform kann die Steuereinheit 42 die Reinigungseinheit 36 derart steuern, dass das Reinigungsmedium 37 erst dann in die Übertragungsstrecke 26 eingebracht wird, sobald ein vordefinierter Abstand zwischen den Übertragungsgliedern 34 unterschritten wird. Damit wird das Reinigungsmedium 37 erst dann eingebracht, wenn die größtmögliche Reinigungskraft erzielt werden kann.

In einer weiteren alternativen Ausführungsform ist die Steuereinheit 42 außerdem dazu ausgebildet, einen Verschmutzungsgrad der Übertragungsstrecke 26 zu detektieren. Die Reinigungseinheit 36 wird dann in Abhängigkeit des Verschmutzungsgrads durch die Steuereinheit 42 angesteuert. So kann beispielsweise bei einem höheren Verschmutzungsgrad ein höherer Druck an der Druckeinheit 40 eingestellt werden. Des Weiteren besteht die Möglichkeit, in Abhängigkeit des Verschmutzungsgrads eine größere Menge von Lösungsmitteln beizumischen.

Durch die erfindungsgemäße Energieübertragungsvorrichtung 30 und die erfindungsgemäße Energieübertragungsanordnung 14 kann eine drahtlose Energieübertragung auch gefahrlos in Umgebungen eingesetzt werden, in denen mit magnetisierbaren Stäuben oder Verschmutzungen zu rechnen ist.

Obgleich somit bevorzugte Ausführungsformen der erfindungsgemäßen Energieübertragungsvorrichtung 30 und der erfindungsgemäßen Energieübertragungsanordnung 14 gezeigt worden sind, versteht sich, dass verschiedene Abwandlungen und Modifikationen vorgenommen werden können, ohne den Rahmen der Erfindung zu verlassen.

Beispielsweise kann die Energieübertragungsanordnung 14 in beliebigen induktiv gekoppelten Energieübertragungssystemen eingesetzt werden. So kann die Energieübertragungsanordnung 14 auch bei induktiven Ladeeinrichtungen für Maschinen verwendet werden.

Außerdem kann die Reinigungseinheit 36 an einem mobilen und/oder fest montierten Übertragungsglied 34 angeordnet werden.

## Patentansprüche

1. Energieübertragungsvorrichtung (30) mit
- einer Anschlusseinheit (32) zum Anschließen einer elektrischen Energiequelle (16) oder einer elektrischen Energiesenke (12),
- einem Übertragungsglied (34), das mit der Anschlusseinheit (32) elektrisch gekoppelt ist und das zur Übertragung von elektrischer Energie mit einem zweiten Übertragungsglied (34) induktiv koppelbar ist, und
**dadurch gekennzeichnet, dass**
- einer Reinigungseinheit (36), die dazu ausgebildet ist, ein Reinigungsmedium (37) in eine Übertragungsstrecke (26) zwischen dem ersten Übertragungsglied (34) und dem zweiten Übertragungsglied (34) einzubringen, um Partikel (28) aus der Übertragungsstrecke (26) zu entfernen.

2. Energieübertragungsvorrichtung nach Anspruch 1, wobei die Partikel (28) magnetisierbare Partikel (28) aufweisen.

3. Energieübertragungsvorrichtung nach Anspruch 1 oder 2, wobei die Energieübertragungsvorrichtung (36) ferner eine Steuereinheit (42) aufweist, die dazu ausgebildet ist, eine Annäherung zwischen dem ersten Übertragungsglied (34) und dem zweiten Übertragungsglied (34) zu erkennen und auf der Grundlage der erkannten Annäherung die Reinigungseinheit (36) zu steuern.

4. Energieübertragungsvorrichtung nach einem der Ansprüche 1 bis 3, wobei die Reinigungseinheit (36) dazu ausgebildet ist, die Partikel (28) von in einem Bereich der Übertragungsstrecke (26) angeordneten Oberflächenanteilen des ersten Übertragungsglieds (34) und/oder des zweiten Übertragungsglieds (34) zu entfernen.

5. Energieübertragungsvorrichtung nach einem der Ansprüche 1 bis 4, wobei das erste Übertragungsglied (34) eine Spule zum Übertragen von elektrischer Energie aufweist.

6. Energieübertragungsvorrichtung nach einem der Ansprüche 1 bis 5, wobei die Reinigungseinheit (36) wenigstens eine Zuleitungseinheit (38) zum Einbringen eines Reinigungsmediums (37) in einen Bereich der Übertragungsstrecke (26) aufweist, wobei das Reinigungsmedium (37) dazu ausgebildet ist, die Partikel (28) aus der Übertragungsstrecke (26) zu entfernen.

7. Energieübertragungsvorrichtung nach Anspruch 6, wobei die Zuleitungseinheit (38) mit einer Druckeinheit (40) gekoppelt ist, die dazu ausgebildet ist, das Reinigungsmedium (37) mittels der Zuleitungseinheit (38) unter Druck in den Bereich der Übertragungsstrecke (26) einzubringen.

8. Energieübertragungsvorrichtung nach Anspruch 7, wobei das Reinigungsmedium (37) Umgebungsluft aufweist und wobei die Reinigungseinheit (36) dazu ausgebildet ist, Pressluft in den Bereich der Übertragungsstrecke (26) einzubringen.

9. Energieübertragungsvorrichtung nach einem der Ansprüche 6 bis 8, wobei das Reinigungsmedium (37) Wasser und/oder Lösungsmittel aufweist.

10. Energieübertragungsvorrichtung nach einem der Ansprüche 6 bis 9, wobei die Zuleitungseinheit (38) derart angeordnet ist, dass das Reinigungsmedium (37) in einem Zentralbereich der Übertragungsstrecke (26) in einer Umgebung des ersten Übertragungsglieds (34) einbringbar ist.

11. Energieübertragungsanordnung (14) mit:
- einer ersten Energieübertragungseinheit (18), und
- einer zweiten Energieübertragungseinheit (20), die mit der ersten Energieübertragungseinheit (18) zur Übertragung von elektrischer Energie induktiv koppelbar ist,
wobei wenigstens eine der Energieübertragungseinheiten (18, 20) eine Energieübertragungsvorrichtung (30) gemäß den Ansprüchen 1 bis 10 aufweist.

12. Energieübertragungsanordnung nach Anspruch 11, wobei die erste Energieübertragungseinheit (18) in einem elektrisch antreibbaren Kraftfahrzeug (10) installiert und mit einer Traktionsbatterie (12) des Kraftfahrzeugs (10) elektrisch gekoppelt ist und wobei die zweite Energieübertragungseinheit (20) in einer Ladestation installiert und mit einem Energieversorgungsnetz (16) elektrisch gekoppelt ist.

## Claims

1. Energy transmission apparatus (30) comprising
- a connection unit (32) for connecting an electrical energy source (16) or an electrical energy sink (12),
- a transmission element (34) which is electrically coupled to the connection unit (32) and which can be inductively coupled to a second transmission element (34) for transmitting electrical energy, and
**characterized in that**
- a cleaning unit (36) which is designed to introduce a cleaning medium (37) into a transmission path (26) between the first transmission element (34) and the second transmission element (34) in order to remove particles (28) from the transmission path (26).

2. Energy transmission apparatus according to Claim 1, wherein the particles (28) comprise magnetizable particles (28).

3. Energy transmission apparatus according to Claim 1 or 2, wherein the energy transmission apparatus (36) further has a control unit (42) which is designed to identify that the first transmission element (34) and the second transmission element (34) are approaching one another and to control the cleaning unit (36) on the basis of the said approach being identified.

4. Energy transmission apparatus according to one of Claims 1 to 3, wherein the cleaning unit (36) is designed to remove the particles (28) from surface portions of the first transmission element (34) and/or of the second transmission element (34) which are arranged in a region of the transmission path (26).

5. Energy transmission apparatus according to one of Claims 1 to 4, wherein the first transmission element (34) has a coil for transmitting electrical energy.

6. Energy transmission apparatus according to one of Claims 1 to 5, wherein the cleaning unit (36) has at least one supply line unit (38) for introducing a cleaning medium (37) into a region of the transmission path (26), wherein the cleaning medium (37) is designed to remove the particles (28) from the transmission path (26).

7. Energy transmission apparatus according to Claim 6, wherein the supply line unit (38) is coupled to a pressure unit (40) which is designed to introduce the cleaning medium (37) into the region of the transmission path (26) by means of the supply line unit (38) under pressure.

8. Energy transmission apparatus according to Claim 7, wherein the cleaning medium (37) comprises ambient air, and wherein the cleaning unit (36) is designed to introduce compressed air into the region of the transmission path (26).

9. Energy transmission apparatus according to one of Claims 6 to 8, wherein the cleaning medium (37) comprises water and/or solvent.

10. Energy transmission apparatus according to one of Claims 6 to 9, wherein the supply line unit (38) is arranged in such a way that the cleaning medium (37) can be introduced in a central region of the transmission path (26) in an area surrounding the first transmission element (34).

11. Energy transmission arrangement (14) comprising:
- a first energy transmission unit (18), and
- a second energy transmission unit (20) which can be inductively coupled to the first energy transmission unit (18) in order to transmit electrical energy, wherein at least one of the energy transmission units (18, 20) has an energy transmission apparatus (30) according to Claims 1 to 10.

12. Energy transmission arrangement according to Claim 11, wherein the first energy transmission unit (18) is installed in a motor vehicle (10), which can be electrically driven, and is electrically coupled to a traction battery (12) of the motor vehicle (10), and wherein the second energy transmission unit (20) is installed in a charging station and is electrically coupled to an energy supply system (16).

## Revendications

1. Dispositif de transmission d'énergie (30) comportant
- une unité de raccordement (32) destinée à raccorder une source d'énergie électrique (16) ou un puits d'énergie électrique (12),
- un élément de transmission (34) qui est couplé électriquement à l'unité de raccordement (32) et qui peut être couplé par induction à un deuxième élément de transmission (34) pour la transmission d'énergie électrique, et **caractérisé en ce que**
- une unité de nettoyage (36) qui est conçue pour introduire un agent de nettoyage (37) dans une voie de transmission (26) entre le premier élément de transmission (34) et le deuxième élément de transmission (34) afin d'éliminer des particules (28) de la voie de transmission (26).

2. Dispositif de transmission d'énergie selon la revendication 1, dans lequel les particules (28) comprennent des particules magnétisables (28).

3. Dispositif de transmission d'énergie selon la revendication 1 ou 2, dans lequel le dispositif de transmission d'énergie (36) comporte en outre une unité de commande (42) qui est conçue pour détecter un rapprochement entre le premier élément de transmission (34) et le deuxième élément de transmission (34) et pour commander l'unité de nettoyage (36) sur la base du rapprochement détecté.

4. Dispositif de transmission d'énergie selon l'une quelconque des revendications 1 à 3, dans lequel l'unité de nettoyage (36) est conçue pour éliminer les particules (28) de parties de surface du premier élément de transmission (34) et/ou du deuxième élément de transmission (34) disposées dans une région de la voie de transmission (26).

5. Dispositif de transmission d'énergie selon l'une quelconque des revendications 1 à 4, dans lequel le premier élément de transmission (34) comporte une bobine destinée à transmettre de l'énergie électrique.

6. Dispositif de transmission d'énergie selon l'une quelconque des revendications 1 à 5, dans lequel l'unité de nettoyage (36) comporte au moins une unité d'alimentation (38) pour introduire un agent de nettoyage (37) dans une région de la voie de transmission (26), dans lequel l'agent de nettoyage (37) est conçu pour éliminer les particules (28) de la voie de transmission (26).

7. Dispositif de transmission d'énergie selon la revendication 6, dans lequel l'unité d'alimentation (38) est couplée à une unité de compression (40) qui est conçue pour introduire sous pression l'agent de nettoyage (37) dans la région de la voie de transmission (26) au moyen de l'unité d'alimentation (38).

8. Dispositif de transmission d'énergie selon la revendication 7, dans lequel l'agent de nettoyage (37) comporte de l'air ambiant et dans lequel l'unité de nettoyage (36) est conçue pour introduire de l'air sous pression dans la région de la voie de transmission (26).

9. Dispositif de transmission d'énergie selon l'une quelconque des revendications 6 à 8, dans lequel l'agent de nettoyage (37) comporte de l'eau et/ou un solvant.

10. Dispositif de transmission d'énergie selon l'une quelconque des revendications 6 à 9, dans lequel l'unité d'alimentation (38) est disposée de manière à ce que l'agent de nettoyage (37) puisse être introduit dans une région centrage de la voie de transmission (26) dans un environnement du premier élément de transmission (34).

11. Système de transmission d'énergie (14) comportant :
- une première unité de transmission d'énergie (18), et
- une deuxième unité de transmission d'énergie (20), qui peut être couplée par induction à la première unité de transmission d'énergie (18) pour la transmission d'énergie électrique,
dans lequel au moins l'une des unités de transmission d'énergie (18, 20) comporte un dispositif de transmission d'énergie (30) selon les revendications 1 à 10.

12. Système de transmission d'énergie selon la revendication 11, dans lequel la première unité de transmission d'énergie (18) est installée dans un véhicule automobile (10) pouvant être entraîné électriquement et est couplée électriquement à une batterie de traction (12) du véhicule automobile (10) et dans lequel la deuxième unité de transmission d'énergie (20) est installée dans une station de charge et est couplée électriquement à un réseau d'alimentation en énergie (16).
